## Europäisches Patentamt

## European Patent Office

## Office européen des brevets

(19)

(11) Veröffentlichungsnummer: **0 243 309**
**B1**

(12) **EUROPÄISCHE PATENTSCHRIFT**

(45) Veröffentlichungstag der Patentschrift: **26.09.90**

(51) Int. Cl.⁵: **G 01 N 27/28**

(21) Anmeldenummer: **87810223.5**

(22) Anmeldetag: **08.04.87**

(54) Vorrichtung zur Ueberwachung von Neutralisationsprozessen und Verwendung der Vorrichtung bei Abgasreinigungsanlagen.

(30) Priorität: **21.04.86 CH 1635/86**

(43) Veröffentlichungstag der Anmeldung:
**28.10.87 Patentblatt 87/44**

(45) Bekanntmachung des Hinweises auf die Patenterteilung:
**26.09.90 Patentblatt 90/39**

(84) Benannte Vertragsstaaten:
**AT BE CH DE ES FR GB GR IT LI LU NL SE**

(56) Entgegenhaltungen:
**EP-A-0 033 188**
**FR-A-2 354 558**
**US-A-3 440 518**

**PATENT ABSTRACTS OF JAPAN, Band 7, Nr. 142 (P-205)1287r, 22. Juni 1983; & JP-A-58 55 748 (TSUNEO SHIRAI) 2. April 1983**

(73) Patentinhaber: **Heierli, Werner**
**Chemin des Artisans 6**
**CH-1580 Avenches (CH)**

(72) Erfinder: **Heierli, Werner**
**Chemin des Artisans 6**
**CH-1580 Avenches (CH)**

(74) Vertreter: **Riederer, Conrad A., Dr.**
**Bahnhofstrasse 10**
**CH-7310 Bad Ragaz (CH)**

Courier Press, Leamington Spa, England.

**Beschreibung**

Die Erfindung betrifft eine Vorrichtung zur Ueberwachung von Neutralisationsprozessen, mit einem pH-Sensor und einer an diesen angeschlossenen Schaltung, wobei der pH-Sensor eine electrochemische Zelle, eine in der Zelle enthaltene wässrige Masse, ein in der Wandung der Zelle angeordnetes Diaphragma, eine in der Zelle angeordnete Referenzelektrode und eine ausserhalb der Zelle angeordnete Messelektrode aufweist.

Zur pH-Messung werden üblicherweise als Sensoren oder Fühler sogenannte Glaselektroden verwendet, bei denen eine dünne, für Wasserstoffionen durchlässige Glasmembran eine in einer Zelle angeordnete Referenzelektrode von einer ausserhalb dieser Zelle sich befindlichen Messelektrode trennt. In der Zelle befindet sich eine wässrige Masse bekannter Zusammensetzung, z.B. Calomel. Es hat sich gezeigt, dass solche pH-Sensoren nicht über längere Zeit wartungsfrei fünktionieren und dass grosse Messfehler auftreten können, wenn das zu messende Medium Feststoffteilchen enthält. Durch diese werden die Membranen der Sensoren nach kurzer Zeit verstopft bzw. zerstört. Bei Anlagen zur Nassreinigung von Abgasen bei Feuerungsanlagen ist aber mit Feststoffteilen in der Waschflüssigkeit zu rechnen, und es wird auch ein wartungsfreier Betrieb über längere Zeit gefordert.

Die Stand der Technik bildende FR-A-2 354 558 beschreibt eine Vorrichtung zum Feststellen von Ionen in Flüssigkeiten. Als Mess- und Referenzelektroden dienen Glaselektroden. Die Referenzelektrode befindet sich in einem Raum zwischen zwei konzentrischen elektrisch isolierenden Hüllen, zwischen welche sich eine gelierte Referenzflüssigkeit befindet. Der die Referenzflüssigkeit enthaltende Raum ist mittels einer Dichtung abgeschlossen, welche eine ionendurchlässige Verbindung zwischen der Referenzflüssigkeit und der zu prüfenden Flüssigkeit bildet. Neben der Messelektrode befindet sich ein piezoelektrischer Wandler zur Erzeugung von Ultraschall-Vibrationen zur Reinigung der aktiven Flächen. Eine elektrische Schaltung für die Verstärkung der schwachen Ausgangssignale der hochvolumigen Glaselektroden ist innerhalb der innersten Hülle der Vorrichtung eingegossen. Diese Vorrichtung hat ebenfalls die eingangs erwähnten Nachteile der Glaselektroden. Um den Nachteil der kurzen Lebensdauer der Glaselektroden zu lindern, wird in der FR-A-2 354 558 weiter vorgeschlagen, drei oder mehr Glaselektroden als Messelektroden vorzusehen und mittels einer Vergleichschaltung diese zu überwachen. Bei der Feststellung eines Unterschieds löst die Vergleichschaltung einen Alarm aus. Die Messung wird dann bis zum Auswechseln der Vorrichtung von den verbleibenden intakten Glaselektroden weitergeführt. Es ist offensichtlich, dass sich eine solche Vorrichtung nicht zur Ueberwachung einer Anlage eignet, die über längere Zeit wartungsfrei arbeiten muss, wie dies beispielsweise eine für die Heizungsanlage eines Wohnhauses konzipierte Rauchgaswaschanlage der Fall ist.

Die DE-OS 31 12 997 sieht eine Rauchgaswaschanlage vor, mit welcher das Kohlendioxid und das Schwefeldioxid des Rauchgases durch Wasser ausgewaschen wird. Das Waschwasser wird chemisch neutralisiert und danach wieder zur Rauchgaswäsche verwendet. Zu diesem Zweck ist unter anderem ein Neutralisationsbehälter vorgesehen, der einen pH-Wert-Regler aufweist, welcher mit einem Dosierventil verbunden ist, das zwischen dem Laugenbehälter und dem Neutralisationsbehälter angeordnet ist. Solche Rauchgas- oder Abgaswaschanlagen haben sich jedoch nicht bewährt, weil die in der Praxis verwendeten pH-Sensoren nicht über längere Zeit zuverlässig arbeiten. Die Gründe für das Versagen der handelsüblichen pH-Sensoren bei der Nassreinigung von Abgasen sind bisher weitgehend unbekannt geblieben.

Wegen der Probleme mit den Sensoren wurden andere Wege gesucht, um einen geeigneten pH-Wert in der Waschflüssigkeit aufrecht zu erhalten. So geht beispielsweise die europäische Patentanmeldung 0 152 742 von der Tatsache aus, dass bei der Verbrennung von einem Kilogramm Heizöl 0,8 Liter Wasser entstehen, das kondensiert und in einem Behälter gesammelt werden kann. Die zitierte Anmeldung sieht eine Steuereinrichtung vor, um beim Erreichen eines vorbestimmten Wasserniveaus das Ablassen einer vorbestimmten Menge von Wasser zu steuern und zusätzlich eine Dosieranlage zu betätigen, die eine vorbestimmte Menge eines Neutralisationsmittels in die zum Waschen verwendete Flüssigkeit abgibt. Es hat sich aber gezeigt, dass auf diese Weise keine genaue Steuerung des pH-Werts erzielt werden kann. Ist aber der pH-Wert zu klein, so leidet darunter die Reinigungswirkung der Anlage. Darüber hinaus besteht die Gefahr, dass die saure Waschflüssigkeit korrodierend auf die Waschanlage einwirkt. Ist jedoch der pH-Wert zu gross, so steigt auch der Verbrauch an Neutralisationsmittel. Da bei der beschriebenen Anlage Flüssigkeit in die Kanalisation abgegeben wird, besteht zudem die Gefahr, dass dadurch die Funktion der Kläranlage gestört wird. So wird der biologische Abbau sowohl durch zu stark alkalische als auch durch zu stark saure Abwässer gestört. Dazu kommt noch erschwerend hinzu, dass saure Abwässer meist auch grosse Mengen an Schwermetallen enthalten, die von korrodierten Anlageteilen stammen. Bei Abgaswaschanlagen kann nämlich eine saure Waschflüssigkeit Schwermetalle aus den zumeist aus rostfreiem Stahl bestehenden Anlageteilchen lösen.

Es ist daher Aufgabe der vorliegenden Erfindung, eine Vorrichtung zur Ueberwachung von Neutralisationsprozessen zu schaffen, die die Nachteile der im Handel erhältlichen Vorrichtungen zur Messung des pH-Werts nicht aufweist und sich insbesondere zur Ueberwachung des pH-Werts der Waschflüssigkeit bei Abgasreinigungsanlagen eignet. Die Vorrichtung soll insbesondere lange Zeit wartungsfrei arbeiten und nicht z.B. durch in der Flüssigkeit enthaltene Feststoffe, wie z.B. Kalziumkarbonat oder Kalziumsulfat, beeinträchtigt werden.

Gemäss der Erfindung wird dies bei einer Vorrichtung der eingangs erwähnten Art dadurch erreicht, dass die in der Zelle enthaltene wässrige Masse Kalziumsulfat und Kalziumkarbonat enthält, dass die Elektroden aus Metall bestehen, und dass zwecks Unterstützung der Ausbildung eines Puffersystems im pH-Sensor und der Stabilisierung des pH-Sensors die Schaltung einen Verstärker enthält, welcher an die Messelektrode eine Rückführspannung anlegt, die der Spannung entspricht, welche der pH-Sensor beim gewünschten Arbeits-pH-Wert aufweist. Da die in der Zelle enthaltene wässrige Masse die gleichen Stoffe enthält, die auch in der Flüssigkeit, deren pH-Wert zu prüfen ist, enthalten sind, verläuft im Betrieb die Alterung bei beiden Elektroden gleich, so dass der pH-Sensor während einer relativ langen Lebensdauer weitgehend stabil bleibt. Die Schaltung verhindert einerseits, dass der pH-Sensor z.B. durch auftretende elektrische Felder in der Messflüssigkeit nachhaltig gestört wird, und andererseits unterstützt sie die Ausbildung des nachstehend beschriebenen Puffersystems. Es hat sich gezeigt, dass die in der Zelle enthaltenen Stoffe auf das Metall der Referenzelektrode einwirken. So wird vermutet, dass das Kalziumkarbonat an der Oberfläche der Referenzelektrode ein Metallkarbonat bildet, welches am Aufbau eines Puffersystems (pH 9,5) in der Zelle mitwirkt. An der Messelektrode hingegen kommt die zu messende Wasserstoffionenkonzentration zur Wirkung, so dass über beiden Elektroden eine pH-Wert-abhängige elektrische Spannung entsteht. Im Ausführungsbeispiel bestehen die Elektroden aus einem Edelstahl, und es dürfte sich an der Referenzelektrode Eisenkarbonat bilden.

Im Betrieb der Vorrichtung erfolgt beim Auftreten von Feststoffteilchen aus Kalziumhydroxid an der Messelektrode sehr rasch eine grosse Aenderung der Potentialdifferenz. Dieses empfindliche Ansprechen auf solche Feststoffteilchen ist von besonderer Bedeutung, weil dadurch die Konzentration der festen Neutralisationsmittel in der Flüssigkeit gut unter Kontrolle gehalten werden kann. Dadurch wird eine Ueberdosierung sicher vermieden und eine optimale Ausnützung des Neutralisationsmittels gewährleistet.

Vorteilhaft besteht das Diaphragma aus Keramik, z.B. porösem Porzellan. Porzellan besitzt sehr feine Poren, durch welche hindurch der Elektrolyt in der Zelle in Kontakt mit der Flüssigkeit ausserhalb der Zelle tritt. Dennoch besteht keine Gefahr, dass der Elektrolyt aus der Zelle ausgewaschen wird.

Die Rückführspannung hat Einfluss auf die im Sensor ablaufenden elektrochemischen Vorgänge, indem sie die Ausbildung bzw. Regenerierung des Puffersystems nach massiver Störung, z.B. Austrocknung, falsche Anwendung, elektrische Umladung etc., unterstützt und dadurch einen wichtigen Beitrag zur Langzeitstabilität des Sensors liefert. Durch die beschriebene Ausgestaltung der Schaltung wird somit eine äusserst stabil arbeitende Vorrichtung zur Bestimmung des pH-Werts geschaffen.

Die Schaltung ist vorteilhaft so ausgebildet, dass der Ausgang des Verstärkers über ein Potentiometer mit dem nicht-invertierenden Eingang des Verstärkers verbunden ist, dass eine Elektrode des pH-Sensors an eine Stromquelle und die andere Elektrode über einen Widerstand an den nicht-invertierenden Eingang des Verstärkers angeschlossen sind, und dass parallel zum pH-Sensor ein Widerstand geschaltet ist, der in der Grössenordnung des inneren Widerstandes des Sensors liegt. Die Schaltung erzeugt über dem parallel zum Sensor geschalteten Widerstand eine Spannung gegen die Stromquelle. Diese wird Rückführspannung genannt und entspricht der Spannung des Sensors beim gewünschten Arbeits-pH-Wert. Die erforderliche Rückführspannung kann mit dem Potentiometer eingestellt werden.

Der Ausgang des Verstärkers ist über ein RC-Glied an den invertierenden Eingang des Verstärkers angeschlossen. Dies bewirkt, dass die Ausgangsspannung des Verstärkers der Sensorspannung folgt während hochfrequente Störsignale unterdrückt werden.

Zweckmässigerweise ist ein Spannungsteiler vorgesehen, dessen Mittelabzapfung an die Elektrode des pH-Sensors angeschlossen ist. Dadurch ergibt sich eine einfache und zweckmässige Energieversorgung des Verstärkers. Zweckmässigerweise ist ein Lastwiderstand an den Ausgang eines geeigneten Operationsverstärkers angeschlossen. Dies ermöglicht eine Anpassung der Inpedanz des Verstärkerausgangs. Vorteilhaft ist zwischen der Messelektrode des Sensors und der Masse der Schaltung ein Kondensator geschaltet. Dieser leitet hochfrequente Signale ab und trägt so zur Stabilisierung der Vorrichtung bei.

Die Erfindung betrifft auch die Verwendung der Vorrichtung zur Kontrolle des pH-Werts der Waschflüssigkeit einer Abgasreinigungsanlage, insbesondere einer solchen bei einer Feuerungsanlage. Der Waschflüssigkeit einer solchen Abgasreinigungsanlage wird als Neutralisationsmittel vorteilhaft Kalziumoxid oder Kalziumhydroxid zugegeben. Dabei wird der pH-Wert der Waschflüssigkeit zweckmässigerweise im Bereich von 6 bis 6,8 gehalten. Damit wird erreicht, dass praktisch nur Kalziumsulfat aus der Waschflüssigkeit ausgeschieden wird. Es kommt also praktisch nicht zur Bildung von Kalziumkarbonat. Dies heisst mit anderen Worten, dass in erster Linie der Schwefelanteil aus dem Abgas abgeschieden wird, nicht aber der $CO_2$-Anteil. Auf diese Weise wird eine erhebliche Einsparung an Neutralisationsmittel erreicht. Darüber hinaus werden Kalkablagerungen in der Waschanlage praktisch verhindert, und es fällt als Neutralisationsprodukt nur relativ wenig Kalziumsulfat an, also eine harmlose Substanz, die besser unter dem Namen Gips bekannt ist.

Die Erfindung wird nun unter Bezugnahme auf die Zeichnung beschrieben. Es zeigt:

Fig. 1 schematisch eine Heizanlage mit einer Abgasreinigungsanlage,

Fig. 2 ein Ausführungsbeispiel eines pH-Sensors und

Fig. 3 ein Ausführungsbeispiel einer zusammen mit dem pH-Sensor von Figur 2 verwendeten Schaltung.

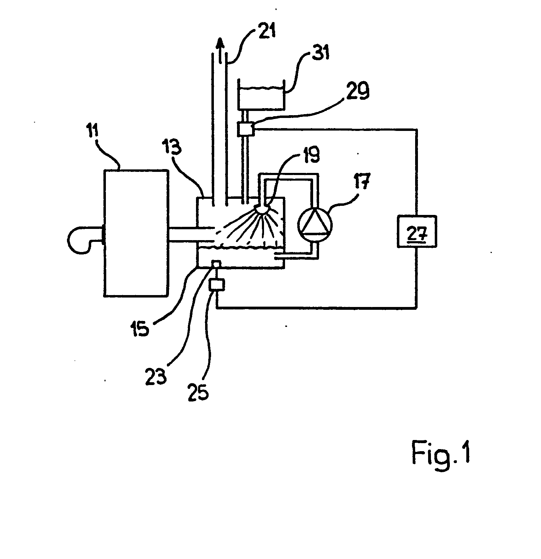

Bei der schematischen Darstellung von Figur 1 ist mit der Bezugsziffer 11 ein Heizkessel und mit der Bezugsziffer 13 eine Abgas-Reinigungsanlage bezeichnet. Diese besteht im wesentlichen aus einem Behälter 15, einer Umwälzpumpe 17 und einer Sprühvorrichtung 19. Die Abgase des Kessels 11 werden also durch einen Sprühregen geführt, bevor sie aus der Abgasreinigungsanlage 13 durch den Schornstein 21 entweichen. Ein pH-Sensor 23 ist an eine Schaltung 25 angeschlossen, welche ein dem gemessenen pH-Wert entsprechendes Signal an eine Steuerschaltung 27 liefert. Diese liefert bei einem vorbestimmten pH-Wert ein Signal zur Betätigung der Dosiervorrichtung 29, um aus einem Behälter 31 Neutralisationsmittel in den Waschbehälter 15 zu leiten.

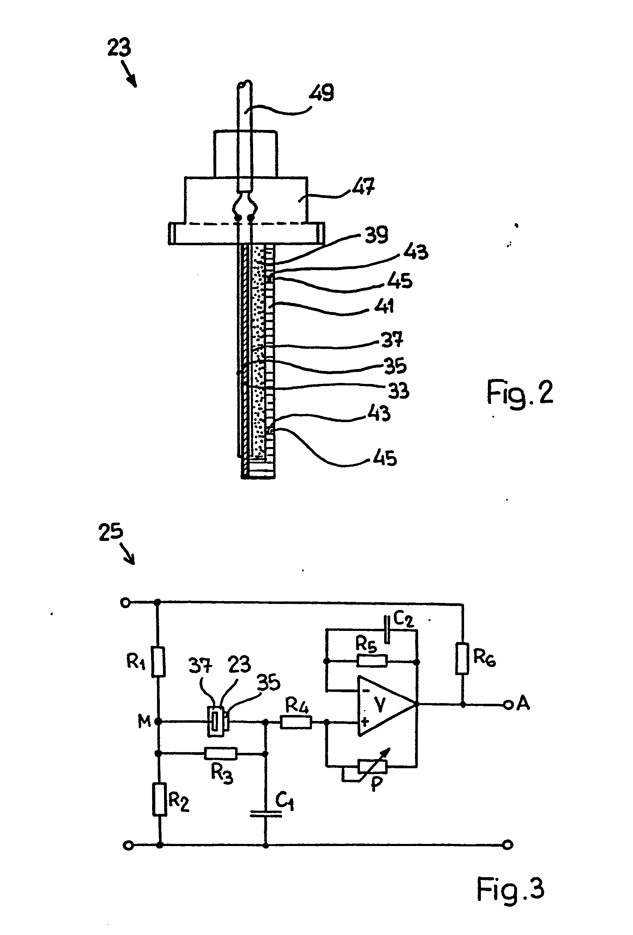

Figur 2 zeigt nun einen pH-Sensor 23, wie er bei einer Abgas-Wascheinrichtung, wie sie beispielsweise in Figur 1 dargestellt ist, verwendet werden kann. Bei diesem pH-Sensor oder Fühler 23 sind auf einer Mittelplatte 33 aus isolierendem Material, z.B. aus glasfaserverstärktem Kunststoff, zwei Elektroden 35, 37 angebracht. Diese Elektroden 35, 37 bestehen aus einem Metall, z.B. aus Edelstahl. Die Elektrode 37 dient als Referenzelektrode und befindet sich innerhalb einer Zelle 39. Die Elektrode 35 dient als Messelektrode und ist ausserhalb der Zelle 39 angeordnet, wo sie mit der zu prüfenden Flüssigkeit in Kontakt gebracht werden kann. Die Zelle 39 enthält eine wässrige Masse, die Kalziumkarbonat und Kalziumsulfat enthält. Die Zelle 39 wird durch die Mittelplatte 33 und eine Wandung 41 aus Kunststoff gebildet. Die Wandung 41 besteht beispielsweise aus Polyurethan und ist mit der Mittelplatte 33 fest verbunden. In der Wandung 41 befinden sich Oeffnungen 43, in denen Diaphragmen 45, z.B. aus keramischem Material, vorzugsweise aus Porzellan, eingesetzt sind. Die Elektroden 35, 37 sind im Sockel 47 mit dem Anschlusskabel 49 verbunden, das zu einer Schaltung 25 führt.

Befindet sich der untere Teil des Sensors 23 in einer Flüssigkeit, z.B. der Waschflüssigkeit einer Abgasreinigungsanlage 13 (Fig. 1), dann entsteht über den Elektroden 35, 37 nach einer gewissen Einlaufzeit eine stabile Potentialdifferenz, die vom pH-Wert der Flüssigkeit abhängig ist. Diese Potentialdifferenz gehorcht der nachstehenden Formel:

$$E = 560\ mV - 59\ mV \cdot pH + E_0$$

$E_0$ besitzt für verschiedene Sensoren Werte von −20 bis +20 mV.

Die Belastbarkeit des beschriebenen pH-Sensors 23 ist klein. Sie liegt in der Grössenordnung von maximal 10 nA. Infolgedessen muss die Schaltung 25 so konzipiert sein, dass sie Störungen aus dem Umfeld eliminieren kann und die Messbelastung ausreichend klein bleibt. Sie soll auf den pH-Sensor 23 stabilisierend einwirken. Zu diesem Zweck legt sie an die Messelektrode 35 eine Rückführspannung an, die derjenigen Spannung des Sensors entspricht, welche er beim Arbeits-pH aufweist.

Der beschriebene Sensor 23 hat die Eigenschaft, dass beim Auftreffen von Feststoffteilchen des Neutralisationsmittels, z.B. $Ca(OH)_2$, an der Messelektrode 35 rasch eine grosse Aenderung der Potentialdifferenz entsteht. Diese Aenderung wird durch die Schaltung 25 festgestellt.

Wie Figur 1 zeigt, wird das Ausgangssignal der Schaltung 25 der Steuerschaltung 27 zugeführt, welche beim Erreichen eines vorbestimmten pH-Werts die Dosiervorrichtung 29 betätigt, um die Zufuhr von Neutralisationsmittel anzustellen bzw. abzustellen. Auf diese Weise wird eine genaue Steuerung der Neutralisationsmittelzufuhr bewirkt. Es kann also eine Ueberdosierung vermieden und eine optimale Ausnützung des Neutralisationsmittels gewährleistet werden.

Die in Figur 3 gezeigte Schaltung 25 weist einen Spannungsteiler mit den Widerständen $R_1$ und $R_2$ auf. Die Mittelanzapfung M des Spannungsteilers $R_1$, $R_2$ ist mit der Referenzelektrode 37 des pH-Sensors 23 verbunden. Die Messelektrode 35 des Sensors 23 ist über den Widerstand $R_4$ an den nicht-invertierenden Eingang eines Verstärkers V, z.B. eines Operationsverstärkers, angeschlossen. Parallel zum pH-Sensor 23 ist der Widerstand $R_3$ geschaltet. Ein Kondensator $C_1$ ist zwischen Messelektrode 35 und Masse geschaltet.

Vom Ausgang des Operationsverstärkers V führt ein Potentiometer P zum nicht-invertierenden Eingang des Operationsverstärkers V. Vom Ausgang des Operationsverstärkers V führt ferner ein RC-Glied bestehend aus dem Widerstand $R_5$ und dem Kondensator $C_2$, die parallel geschaltet sind, zum invertierenden Eingang des Operationsverstärkers V. Ein Lastwiderstand $R_6$ ist an den Ausgang des Operationsverstärkers angeschlossen.

Der Operationsverstärker V ist vom Typ mit offenem Kollektor. Die einzelnen Elemente der Schaltung haben beispielsweise folgende Werte:

$R_1$ 5,6 kΩ
$R_2$ 5,6 kΩ
$R_3$ 4,7 MΩ
$R_4$ 2,2 MΩ
$R_5$ 1 MΩ
$R_6$ 10 kΩ
$C_1$ 0,1 μF
$C_2$ 0,1 μF
P 1 MΩ

Die Erfindung ist nicht auf die beschriebenen Ausführungsbeispiele beschränkt. So ist es beispielsweise möglich, anstelle der beschriebenen Ausführungsbeispiele der Schaltung 25 eine andere geeignete Schaltung zu verwenden. Des weiteren ist auch denkbar, die beschriebene Schaltung für pH-Sensoren etwas anderer Bauart zu benützen.

**Patentansprüche**

1. Vorrichtung zur Ueberwachung von Neutralisationsprozessen, mit einem pH-Sensor (23) und einer an diesen angeschlossenen Schaltung (25), wobei der pH-Sensor (23) eine electrochemische Zelle (39), eine in der Zelle (39) enthaltene wässrige Masse, ein in der Wandung (41) der Zelle (39) angeordnetes Diaphragma (45), eine in der Zelle (39) angeordnete Referenzelektrode (37) und eine ausserhalb der Zelle (39) angeordnete Messelektrode (35) aufweist, dadurch gekennzeichnet, dass die in der Zelle (39) enthaltene wässrige Masse Kalziumsulfat und Kalziumkarbonat enthält, dass die Elektroden (35, 37) aus Metall bestehen, und dass zwecks Unterstützung der Ausbildung eines Puffersystems im pH-Sensor und der Stabilisierung des pH-Sensors die Schaltung (25) einen Verstärker (V) enthält, welcher an die Messelektrode (35) eine Rückführspannung anlegt, die der Spannung entspricht, welche der pH-Sensor beim gewünschten Arbeits-pH-Wert aufweist.

2. Vorrichtung nach Anspruch 1, dadurch gekennzeichnet, dass die Zelle (39) festes Kalziumsulfat und Kalziumkarbonat in Pulverform enthält.

3. Vorrichtung nach Anspruch 1 oder 2, dadurch gekennzeichnet, dass die Elektroden (35, 37) aus Edelstahl bestehen.

4. Vorrichtung nach einem der Ansprüche 1 bis 3, dadurch gekennzeichnet, dass das Diaphragma (45) aus Keramik, z.B. porösem Porzellan, besteht.

5. Vorrichtung nach einem der Ansprüche 1 bis 4, dadurch gekennzeichnet, dass der Ausgang des Verstärkers (V) über ein Potentiometer (P) mit dem nicht-invertierenden Eingang des Verstärkers (V) verbunden ist, dass eine Elektrode (37) des pH-Sensors (23) an eine Stromquelle und die andere Elektrode (35) über einen Widerstand (R$_4$) an den nicht-invertierenden Eingang des Verstärkers (V) angeschlossen sind, und dass parallel zum pH-Sensor (23) ein Widerstand (R$_3$) geschaltet ist.

6. Vorrichtung nach Anspruch 5, dadurch gekennzeichnet, dass der Ausgang des Verstärkers (V) über ein RC-Glied (C$_2$, R$_5$) an den invertierenden Eingang des Verstärkers (V) angeschlossen ist.

7. Vorrichtung nach Anspruch 5 oder 6, dadurch gekennzeichnet, dass ein Spannungsteiler (R$_1$, R$_2$) vorgesehen ist, dessen Mittelanzapfung (M) an die Referenzelektrode (37) des pH-Sensors (23) angeschlossen ist.

8. Vorrichtung nach einem der Ansprüche 5 bis 7, dadurch gekennzeichnet, dass ein Lastwiderstand (R$_6$) an den Ausgang des Verstärkers (V) angeschlossen ist.

9. Vorrichtung nach einem der Ansprüche 5 bis 8, dadurch gekennzeichnet, dass zwischen der Messelektrode (35) des pH-Sensors (23) und Masse ein Kondensator (C$_1$) geschaltet ist.

10. Vorrichtung nach einem der Ansprüche 5 bis 9, dadurch gekennzeichnet, dass der Verstärker ein Operationsverstärker (V) ist.

11. Verwendung der Vorrichtung nach einem der Ansprüche 1 bis 10 zur Kontrolle des pH-Werts der Waschflüssigkeit einer Abgasreinigungsanlage, insbesondere einer solchen bei einer Feuerungsanlage.

12. Verwendung nach Anspruch 11, dadurch gekennzeichnet, dass der Waschflüssigkeit als Neutralisationsmittel Kalziumoxid oder Kalziumhydroxid zugegeben wird.

13. Verwendung nach Anspruch 11, dadurch gekennzeichnet, dass der pH-Wert der Waschflüssigkeit im Bereich von 6 bis 6,8 gehalten wird.

**Revendications**

1. Dispositif de surveillance de processus de neutralisation, comprenant un détecteur de pH (23) et un circuit (25) raccordé à celui-ci, le détecteur de pH (23) présentant une cellule électrochimique (39), une masse aqueuse contenue dans la cellule (39), un diaphragme (45) disposé dans la paroi (41) de la cellule (39), une électrode de référence (37) disposée dans la cellule (39) et une électrode de mesure (35) disposée à l'extérieur de la cellule (39), caractérisé en ce que la masse aqueuse contenue dans la cellule (39) contient du sulfate de calcium et du carbonate de calcium, en ce que les électrodes (35, 37) sont en métal, et en ce qu'afin de faciliter la formation d'un système tampon dans le détecteur de pH et la stabilisation du détecteur de pH, le circuit (25) contient un amplificateur (V) qui applique à l'électrode de mesure (35) une tension de rétroaction qui correspond à la tension que présente le détecteur de pH lorsque le pH est à la valeur désirée de fonctionnement.

2. Dispositif selon la revendication 1, caractérisé en ce que la cellule (39) contient du sulfate de calcium et du du carbonate de calcium solides sous forme de poudre.

3. Dispositif selon la revendication 1 ou 2, caractérisé en ce que les électrodes (35, 37) sont en acier spécial.

4. Dispositif selon l'une quelconque des revendications 1 à 3, caractérisé en ce que le diaphragme (45) est en céramique, par exemple en porcelaine poreuse.

5. Dispositif selon l'une quelconque des revendications 1 à 4, caractérisé en ce que la sortie de l'amplificateur (V) est reliée à l'entrée non inverseuse de l'amplificateur (V) par l'intermédiaire d'un potentiomètre (P), en ce qu'une électrode (37) du détecteur de pH (23) est reliée à une source de courant et l'autre électrode (35) est raccordée à l'entrée non inverseuse de l'amplificateur (V) par l'intermédiaire d'une résistance (R$_4$), et en ce qu'une résistance (R$_3$) est montée en parallèle sur le détecteur de pH (23).

6. Dispositif selon la revendication 5, caractérisé en ce que la sortie de l'amplificateur (V) est reliée à l'entrée inverseuse de l'amplificateur (V) par l'intermédiaire d'un circuit RC (C$_2$, R$_5$).

7. Dispositif selon la revendication 5 ou 6, caractérisé en ce qu'il est prévu un diviseur de tension (R₁, R₂) dont la prise médiane (M) est reliée à l'électrode de référence (37) du détecteur de pH (23).

8. Dispositif selon l'une quelconque des revendications 5 à 7, caractérisé en ce qu'une résistance de charge (R₆) est raccordée à la sortie de l'amplificateur (V).

9. Dispositif selon l'une quelconque des revendications 5 à 8, caractérisé en ce qu'un condensateur (C₁) est monté entre l'électrode de mesure (35) du détecteur de pH (23) et la masse.

10. Dispositif selon l'une quelconque des revendications 5 à 9, caractérisé en ce que l'amplificateur est un amplificateur opérationnel (V).

11. Utilisation du dispositif selon l'une quelconque des revendications 1 à 10 pour le contrôle du pH du liquide de lavage d'une installation d'épuration des gaz d'échappement, en particulier d'une installation d'épuration adjointe à une installation de chauffe.

12. Utilisation selon la revendication 11, caractérisée en ce que de l'oxyde de calcium ou de l'hydroxyde de calcium est ajouté au liquide de lavage en tant qu'agent de neutralisation.

13. Utilisation selon la revendication 11, caractérisée en ce que le pH du liquide de lavage est maintenu à une valeur dans la gamme de 6 à 6,8.

## Claims

1. A device for controlling neutralisation processes, said device comprising a pH-sensor (23) and a circuit connected to said pH-sensor (23), said pH-sensor (23) comprising an electrochemical cell (39), a watery mass contained in said cell (39), a diaphragma (45) in the wall of said cell (39), a reference electrode (37) located in said cell (39) and a measuring electrode (35) located outside of said cell (39), characterised in that the watery mass in said cell (39) comprises calcium sulfate and calcium carbonate, in that the electrodes (35, 37) consist of metal, and in that to facilitate the creation of a buffering system and to stabilise the pH-sensor the circuit (25) comprises an amplifier (V), which applies a return voltage to the measuring electrode (35), said return voltage corresponding to the voltage which the pH-sensor has at the desired operating pH-value.

2. Device according to claim 1, characterised in that the cell (39) contains solid calcium sulphate and calcium carbonate in form of powder.

3. Device according to claim 1 or 2, characterised in that the electrodes (35, 37) consist of stainless steel.

4. Device according to one of the claims 1 to 3, characterised in that the diaphragma (45) consists of ceramics, e.g. porous porcelain.

5. Device according to one of the claims 1 to 4, characterised in that the output of the amplifier (V) is connected over a potentiometer (P) to the non-inverting input of the amplifier (V), in that one electrode (37) of the pH-sensor (23) is connected to a current source, in that the other electrode (35) of the pH-sensor (23) is connected by resistor (R₄) to the non-inverting input of the amplifier (V), and in that resistor (R₃) is connected parallel to the pH-sensor (23).

6. Device according to claim 5, characterised in that the output of the amplifier (V) is connected over a RC-network (C₂, R₅) to the inverting input of the amplifier (V).

7. Device according to claim 5 or 6, characterised in that a voltage divider (R₁, R₂) is provided, said voltage divider having its center tap (M) connected to the reference electrode (37) of the pH-sensor (23).

8. Device according to one of the claims 5 to 7, characterised in that a load resistor (R₆) is connected to the output of the amplifier (V).

9. Device according to one of the claims 5 to 8, characterised in that a capacitor (C₁) is connected between the measuring electrode (35) of the pH-sensor (23) and ground.

10. Device according to one of the claims 5 to 9, characterised in that the amplifier is an operational amplifier (V).

11. Use of the device according to one of the claims 1 to 10 to control the pH-value of the washing liquid of a waste gas cleaning apparatus, in particular of a heating system.

12. Use according to claim 11, characterised in that calciumoxyde or calciumhydroxyde is added to the washing liquid as neutralisation agent.

13. Use according to claim 11, characterised in that the pH-value of the washing liquid is kept in the region of 6 to 6,8.

Fig.1

1

23

49

47

39
43
45
41
37
35
33
43
45

Fig.2

25

$C_2$

$R_5$

$R_6$

$R_1$

37  23
35

M

$R_4$

V

A

$R_3$

+

P

$R_2$

$C_1$

Fig.3

2